# EUROPÄISCHE PATENTANMELDUNG

(11) **EP 3 214 819 A1**
(43) Veröffentlichungstag der Anmeldung: **06.09.2017**
(21) Anmeldenummer: 16158454.5
(22) Anmeldetag: 03.03.2016
(51) Int. Cl.: H04L 29/06

(54) **VERFAHREN ZUR KOPPLUNG EINES NETZWERKFÄHIGEN OBJEKTES AN EIN ZENTRALSYSTEM SOWIE ZENTRALSYSTEM**

(71) Anmelder: Siemens Aktiengesellschaft, 80333 München (DE)
(72) Erfinder: ADLER, Michael, 90469 Nürnberg (DE); HOFMANN, Klaus-Peter, 91086 Aurachtal-Münchaurach (DE)

(57) **Zusammenfassung**

Die Erfindung umfasst ein Verfahren zur Kopplung eines physischen netzwerkfähigen Objektes (2) an ein Zentralsystem (1) über ein Netzwerk, mit folgenden Schritten:
- Bereitstellen einer Metasprache (3) durch das Zentralsystem (1)
- Kopplung des netzwerkfähigen Objektes an das Zentralsystem (1),
- Übertragen zumindest von Basisdaten des Objektes (2) an das Zentralsystem (1) in der vom Zentralsystem (1) bereitgestellten Metasprache (3),
- Generieren zumindest einer geeigneten Kommunikationsschnittstelle zu einem Datenaustausch zwischen dem Objekt (2) und dem Zentralsystem (1),
- Generieren einer Geschäftslogik, insbesondere für die von dem Objekt (2) kommunizierten Daten.

Zudem umfasst die Erfindung ein Zentralsystem.

## Beschreibung

Die Erfindung betrifft ein Verfahren zur Kopplung eines physischen netzwerkfähigen Objektes an ein Zentralsystem über ein Netzwerk.

Das IoT ist ein wichtiger Bestandteil der Informationstechnik der neuen Generation und sein vollständiger Name lautet das "Internet der Dinge" (Internet of Things). Somit ist das IoT das Internet, über das Dinge miteinander verbunden sind, wie der Name besagt. Insbesondere ist das IoT ein riesiges Netzwerk, das in Kombination mit dem Internet gebildet wird, in dem durch verschiedene Datensensorvorrichtungen wie Sensor, Funkfrequenzidentifizierungstechnik (RFID), Global Positioning System, Infrarotsensor, Laserscanner, Gassensor oder ähnliches, jeder Gegenstand oder Prozess, der ein Überwachen, Verbinden, mit diesem Interagieren benötigt, in Echtzeit erfasst wird und verschiedene Informationen wie dessen Klang, Licht, Wärme, Elektrizität, Mechanik, Chemie, Biologie, Position usw. erfasst werden. Der Zweck des IoT besteht darin, Verbindungen zwischen Dingen untereinander, Dingen und Menschen, allen Dingen und Netzwerken herzustellen, um eine Erkennung, Verwaltung und Steuerung zu erleichtern.

Ein konkretes Problem in diesem Bereich ist die Konfiguration (die Parameter, wie es funktionieren sollte) von den "Dingen" im Kontext einer konkreten Anwendung. Ein typisches Szenario ist eine Anwendung, welche die Objekte (Dinge) im Feld Daten sammeln lässt. Dabei werden die Daten an eine zentrale Datenspeichereinheit, eine Zentraleinheit (z.B. eine Cloud) weitergesandt. Die Zentraleinheit kann dann beispielsweise die Daten analysieren und einen Analysewert davon erstellen. Abhängig davon wie eine Zentraleinheit funktioniert / eingerichtet ist, kann es auch die Einstellungen oder die Konfiguration der Objekte im Feld wechseln.

Jedoch stellt sich hier die Aufgabe, die Objekte im Feld auf eine Art und Weise so zu konfigurieren, dass sie sich in solch einer nützlichen und passenden Weise verhalten, so dass sinnvolle Datenanalytik im Zentralsystem bewerkstelligt werden kann.

Typische Aufgaben in Bezug auf die Konfigurationen sind:
- Datenbezogene Konfigurationsaufgaben:
   - Welche Daten sollen bei welcher Datenquelle (mit Hilfe von drivers und Protokollen) abgeholt werden. Wie oft soll übermittelt werden?
   - Sollten die Daten verdichtet und verschlüsselt werden und wenn ja wie?
   - Sollen die Daten im Falle von Verbindungsproblemen gepuffert übertragen werden?
- Objektbezogene Konfigurationsaufgaben:
   - Wie viel Datenerfassung/Protokollierung und Eigenkontrolle muss getan werden (z.B. im Falle von Fehlern)?
   - Verbindungseinstellungen (wie kann man das Zentralsystem erreichen)?
   - Andere globale verhaltensgebundene Einstellungen.

In derzeitigen IT-Systemen gibt es ein gemeinsames Problem mit solchen IoT-Systemen, nämlich die Vielfalt von Software-Paketen und ihren Software-Versionen im Feld. In den meisten Produktserien, bleiben die verschiedenen Serien/Generationen eines Produkts für eine gewisse Zeit auf dem Markt. Im industriellen Umfeld sind dies mindestens 10 Jahre oder noch länger. Die verschiedenen Generationen/Serien unterstützen verschiedene Merkmale und haben verschiedene Fähigkeiten.

Dadurch tritt nun das Problem auf, dass die Schnittstelle für das Ändern der Konfiguration des Geräts im Feld auch große Unterschiede aufweisen kann. Dadurch ist sie oftmals dem Zentralsystem nicht bekannt. Dies gilt insbesondere dann, wenn das Gerät älteren Baujahres ist.

Der Ansatz einer zentralisierten Durchführung der Objektverwaltung würde
a) einen hohen Bedarf an Kenntnissen/ Wissen über Details der Feldobjekte und
b) einen hohen Entwicklungsaufwand um eine zentrale Codebasis zu entwickeln und zu implementieren
benötigen.

Es ist daher eine Aufgabe der Erfindung ein Verfahren zur Kopplung eines physischen netzwerkfähigen Objektes an ein Zentralsystem über ein Netzwerk sowie ein Zentralsystem anzugeben, welches die oben genannten Probleme löst.

Die erste Aufgabe wird gelöst durch die Angabe eines Verfahrens zur Kopplung eines physischen netzwerkfähigen Objektes an ein Zentralsystem über ein Netzwerk mit folgenden Schritten:
- Bereitstellen einer Metasprache durch das Zentralsystem,
- Kopplung des netzwerkfähigen Objektes an das Zentralsystem,
- Übertragen zumindest von Basisdaten des Objektes an das Zentralsystem in der vom Zentralsystem bereitgestellten Metasprache,
- Generieren zumindest einer geeigneten Kommunikationsschnittstelle zu einem Datenaustausch zwischen dem Objekt und dem Zentralsystem,
- Generieren einer Geschäftslogik, insbesondere für die von dem Objekt kommunizierten Daten.

Die zweite Aufgabe wird gelöst durch die Angabe eines Zentralsystems, welches zur Kopplung eines physischen netzwerkfähigen Objektes über ein Netzwerk ausgestaltet ist, wobei
- eine Metasprache in dem Zentralsystem vorgesehen ist,
- eine Kopplung des netzwerkfähigen Objektes an das Zentralsystem vorgesehen ist,
- eine Übertragung zumindest von Basisdaten des Objektes an das Zentralsystem in der vom Zentralsystem bereitgestellten Metasprache vorgesehen ist,
- eine Generierung zumindest einer geeigneten Kommunikationsschnittstelle zu einem Datenaustausch zwischen dem Objekt und dem Zentralsystem vorgesehen ist,
- eine Generierung einer Geschäftslogik, insbesondere für die von dem Objekt kommunizierten Daten vorgesehen ist.

Dabei sind mit Objekten vor allem Feldobjekte gemeint. Erfindungsgemäß wurde erkannt, dass die klassische Lösung des Stands der Technik auf der Annahme basiert, dass das Zentralsystem, von welcher die angeschlossenen Feldobjekte konfiguriert werden sollen, zumindest die Konfigurationsschnittstelle (er)kennt. Zudem basiert der klassische Ansatz auf der Annahme, dass für jeden unterschiedlichen Objekttypen und Objektversion eine Konfigurationsversion bereitgestellt wird, welche auf dem Zentralsystem implementiert wird.

Dies ist jedoch aufgrund der wachsenden Anzahl von Variationen nicht umsetzbar und führt zu sehr komplexen Konfigurationssystemen in dem Zentralsystem. Nachfolgend werden nur einige der unterschiedlichen Variationen, die ein Feldobjekt aufweisen kann, aufgezählt:
- unterschiedliche individuelle Schnittstellen, abhängig von der Konfigurationsfähigkeit eines Objektes,
- unterschiedliche individuelle Transformationslogiken, um die konkreten Werte eines Geräts auf das zentralisierte Konfigurationsdatenbankmodell abzubilden.

Durch die Erfindung wird der bisherige zentralisierte Ansatz in einen verteilten Ansatz mit generierten Artefakten, wie der Kommunikationsschnittstelle und der Geschäftslogik umzukehren.

Dabei wurde erkannt, dass dem Zentralsystem nicht bekannt ist, was, d.h. welches Objekt, z.B. Feldobjekt, konfiguriert werden kann und wie die angeschlossenen Objekte zu konfigurieren sind.

Erfindungsgemäß definiert das Zentralsystem zunächst eine Metasprache. Durch diese Sprache kann das Objekt dem Zentralsystem "erklären", welche Konfiguration akzeptiert wird, wie es formatiert wird und welche Werte gültig sind.

Dabei ist als Metasprache die "Objektsprache" zu verstehen. Das Zentralsystem kann dann folgende Artefakte davon generieren:
Zum ersten zumindest eine geeignete Kommunikationsschnittstelle zu einem Datenaustausch zwischen dem Objekt und dem Zentralsystem. Und zum zweiten eine Generierung einer Geschäftslogik, insbesondere für die von dem Objekt kommunizierten Daten. Auch kann die Geschäftslogik selbstverständlich vom Zentralsystem kommende Daten transformieren. Dabei ist Geschäftslogik (business logic) im Sinne der Softwaretechnik zu verstehen.

Dabei ist ein Artefakt in der Softwareentwicklung ein Produkt, das als Zwischen- oder Endergebnis entsteht.

Durch die Erfindung ist nun das Zentralsystem viel leichter zu warten und instandzuhalten, da die Implementierung nicht von den verschiedenen Versionen der Software in den Objekten bzw. Feldobjekten abhängt.

Die Metasprache liefert die Flexibilität, Änderungen an den Objekten/Feldobjekten durchzuführen oder diese hinzuzufügen. Dies ist sogar nach einem Produktrelease ohne größere Auswirkungen auf die Softwarebasis des Zentralsystems möglich.

Weiterhin werden mit der Erfindung die Gesamtbetriebskosten solch eines IoT-Systems mit einem Zentralsystem bedeutend reduziert.

In den Unteransprüchen sind weitere vorteilhafte Maßnahmen aufgelistet, die beliebig miteinander kombiniert werden können, um weitere Vorteile zu erzielen.

Bevorzugt wird die Geschäftslogik für eine persistente Datenspeicherung, insbesondere eine persistente Datenspeicherung der Basisdaten, generiert. Damit können auch bei einem Absturz des Systems z.B. die Konfigurationsdaten erhalten bleiben.

Auch kann die Geschäftslogik für eine Datentransformation für die von dem Objekt kommunizierten Daten verwendet werden.

Zusätzlich kann das Zentralsystem zumindest eine objektspezifische Konfigurationsdatei generieren, welche über die Kommunikationsschnittstelle an das Objekt übermittelt wird. Dort kann sie implementiert und zukünftig verwendet werden.

Weiterhin kann die Schnittstelle als eine grafische Schnittstelle (GUI) ausgestaltet werden. Die erhöht die Bedienerfreundlichkeit.

Insbesondere eignet sich das Verfahren dazu, wenn die Kopplung des physischen netzwerkfähigen Objektes an das Zentralsystem eine Erstkopplung ist. Auch ist es besonders geeignet, wenn zusätzlich Objekte an das Zentralsystem angeschlossen werden.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch:

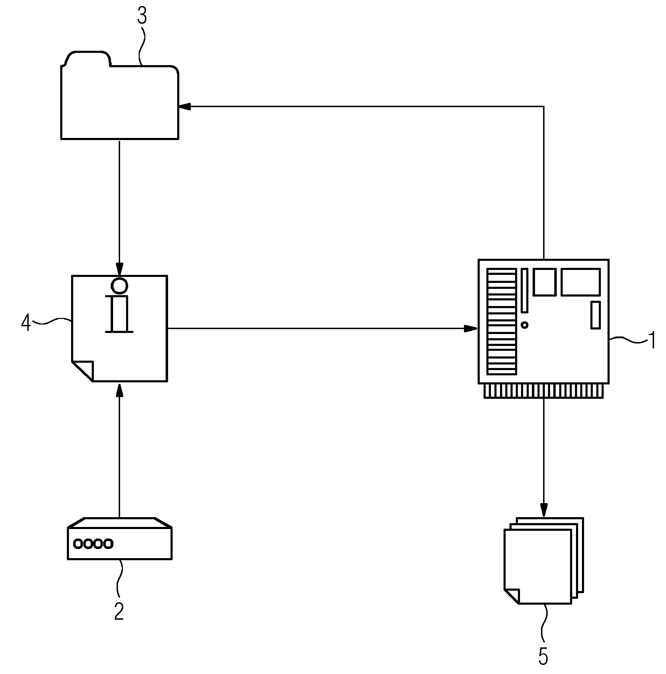

- FIG 1:: das erfindungsgemäße Verfahren.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

Das Zentralsystem des Stands der Technik kann nicht erfassen, was konfiguriert und wie ein angeschlossenes Objekt konfiguriert werden kann. Dies wird durch die Erfindung nun gelöst.

FIG 1 zeigt ein erfindungsgemäßes Zentralsystem 1. Dabei soll ein Feldobjekt 2 über ein Netzwerk an das Zentralsystem 1 gekoppelt werden. Dazu wird durch das Zentralsystem 1 nun eine Metasprache 3 bereitgestellt bzw. definiert. Die Metasprache 3 erlaubt dem Feldobjekt 2 dem Zentralsystem mitzuteilen, was konfiguriert und wie es konfiguriert werden kann. Als Metasprache 3 kann insbesondere eine Markup Language oder eine Backus-Naur-Notation verwendet werden. Die Daten werden ganz besonders vorteilhaft im ASCII-Standard übergeben. Wenn also das Feldobjekt 2 zum ersten Mal an das Zentralsystem 1 angeschlossen wird oder wenn das Feldobjekt 2 ein Update erhält, dann übermittelt das Feldobjekt 2 durch Nutzung der Metasprache 3, welche Konfigurationsmöglichkeiten 4, d.h. welche Konfiguration möglich ist, wie das Feldobjekt 2 formatiert wird und welche Werte gütig sind. Diese Konfigurationsmöglichkeiten 4 werden dem Zentralsystem 1 nun beim Erstkontakt mitgeteilt. Das heißt, es werden zumindest die Basisdaten des Objektes 2 an das Zentralsystem 1 in der vom Zentralsystem 1 bereitgestellten Metasprache 3 übertragen.
Anschließend werden mit der durch die Metasprache 3 übermittelten Informationen sogenannte Artefakte 5 generiert: Dies sind zum einen geeignete Kommunikationsschnittstellen zu einem Datenaustausch zwischen dem Objekt 2 und dem Zentralsystem 1. Dabei weisen die Kommunikationsschnittstellen zumindest Felder und Felddatenüberprüfung sowie andere Datenüberprüfungschecks auf. Zum anderen wird eine Geschäftslogik generiert. Die Geschäftslogik führt die Verarbeitungsfunktionen durch und übernimmt den Kontrollfluß im System. Dabei kann man unter Geschäftslogik auch Geschäftsregeln/Dienste verstehen. Diese können hier z.B. zur Datentransformation verwendet werden. Auch kann durch die Geschäftslogik eine Persistenz zur Speicherung der Konfigurationsdaten oder anderen Daten in einer effizienten Art und Weise erzielt werden. Dabei versteht man unter Persistenz die Fähigkeit, Daten, Objekte oder logische Verbindungen über lange Zeit, insbesondere über einen Programmabbruch hinaus, bereitzuhalten. Die generierten Artefakte 5 können dann objektspezifische Konfigurationsdaten erzeugen (hinsichtlich Version oder Typ zum Beispiel). Diese wiederum können zum Objekt 2 übermittelt werden und dort für verschiedene Anwendungen herangezogen werden.

Nachfolgend kann die Erfindung wie folgt einfach zusammengefasst werden:
Die hier erfindungsgemäß bei der Erstkopplung eingesetzte Metasprache 3, kann als eine kompakte Schnittstelle betrachtet werden kann, über der ein Objekt 2, insbesondere ein Feldobjekt, das Zentralsystem 1 über sich informieren kann.

Es wird somit eine Generierungs"framework" erschaffen, welches die in der Metasprache bereitgestellten Informationen lesen und interpretieren kann, um somit alle benötigen Artefakte 5 zu generieren.

## Patentansprüche

1. Verfahren zur Kopplung eines physischen netzwerkfähigen Objektes (2) an ein Zentralsystem (1) über ein Netzwerk, **ge-kennzeichnet durch** folgende Schritte:
- Bereitstellen einer Metasprache (3) **durch** das Zentralsystem (1),
- Kopplung des netzwerkfähigen Objektes (2) an das Zentralsystem (1),
- Übertragen zumindest von Basisdaten des Objektes (2) an das Zentralsystem (1) in der vom Zentralsystem (1) bereitgestellten Metasprache (3),
- Generieren zumindest einer geeigneten Kommunikationsschnittstelle zu einem Datenaustausch zwischen dem Objekt (2) und dem Zentralsystem (1),
- Generieren einer Geschäftslogik, insbesondere für die von dem Objekt (2) kommunizierten Daten.

2. Verfahren nach Anspruch 1,
**dadurch gekennzeichnet, dass** die Geschäftslogik für eine persistente Datenspeicherung, insbesondere eine persistente Datenspeicherung der Basisdaten, generiert wird.

3. Verfahren nach einem der vorhergehenden Ansprüche,
**dadurch gekennzeichnet, dass** die Geschäftslogik für eine Datentransformation für die von dem Objekt (2) kommunizierten Daten verwendet wird.

4. Verfahren nach einem der vorhergehenden Ansprüche,
**dadurch gekennzeichnet, dass** das Zentralsystem (1) zumindest eine objektspezifische Konfigurationsdatei generiert, welche über die zumindest eine Kommunikationsschnittstelle an das Objekt (2) übermittelt wird.

5. Verfahren nach einem der vorhergehenden Ansprüche,
**dadurch gekennzeichnet, dass** die Kommunikationsschnittstelle als eine grafische Kommunikationsschnittstelle (GUI) ausgestaltet wird.

6. Verfahren nach einem der vorhergehenden Ansprüche
**dadurch gekennzeichnet, dass** die Kopplung des physischen netzwerkfähigen Objektes (2) an das Zentralsystem (1) eine Erstkopplung ist.

7. Verfahren nach einem der vorhergehenden Ansprüche
**dadurch gekennzeichnet, dass** zum Datenaustausch zwischen Objekt (2) und Zentralsystem (1) noch eine weitere Schnittstelle generiert wird.

8. Computerprogramm, das Computerprogrammmittel umfasst, um alle Schritte des Verfahrens der Ansprüche 1-7 auszuführen.

9. Zentralsystem (1), welches zur Kopplung eines physischen netzwerkfähigen Objektes (2) über ein Netzwerk ausgestaltet ist, **dadurch gekennzeichnet, dass**
- eine Metasprache (3) in dem Zentralsystem (1) vorgesehen ist,
- eine Kopplung des netzwerkfähigen Objektes (2) an das Zentralsystem (1) vorgesehen ist,
- eine Übertragung zumindest von Basisdaten des Objektes (2) an das Zentralsystem (1) in der vom Zentralsystem (1) bereitgestellten Metasprache (3) vorgesehen ist,
- eine Generierung zumindest einer geeigneten Kommunikationsschnittstelle zu einem Datenaustausch zwischen dem Objekt (2) und dem Zentralsystem (1) vorgesehen ist,
- eine Generierung einer Geschäftslogik insbesondere für die von dem Objekt (2) kommunizierten Daten vorgesehen ist.

10. Zentralsystem nach Anspruch 9,
**dadurch gekennzeichnet, dass** das Objekt (2) zumindest eine Erfassungseinrichtung aufweist, welche netzwerkfähig ist.

11. Zentralsystem nach Anspruch 9 oder 10,
**dadurch gekennzeichnet, dass** die zumindest eine Kommunikationsschnittstelle zumindest Felder und eine Felddatenüberprüfung aufweist.

12. Zentralsystem nach einem der Ansprüche 9 - 11,
**dadurch gekennzeichnet, dass** die zumindest eine Kommunikationsschnittstelle eine grafische Kommunikationsschnittstelle (GUI) ist.

13. Zentralsystem nach einem der Ansprüche 9 - 12,
**dadurch gekennzeichnet, dass** die Geschäftslogik für eine persistente Datenspeicherung, insbesondere eine persistente Datenspeicherung der Basisdaten aufweist.

14. Zentralsystem nach einem der Ansprüche 9 - 13,
**dadurch gekennzeichnet, dass** die Geschäftslogik für eine Datentransformation ausgestaltet ist.

15. Zentralsystem nach einem der Ansprüche 9 - 14, welches zur Durchführung des Verfahrens nach einem der Ansprüche 1-7 geeignet ist.
